# EUROPEAN PATENT APPLICATION

(11) **EP 2 910 462 A1**
(43) Date of publication of application: **26.08.2015**
(21) Application number: 15155000.1
(22) Date of filing: 13.02.2015
(51) Int. Cl.: B62M 6/55, B62M 3/00

(54) **Center-mounted motor**

(30) Priority: 21.02.2014 TW 103203087
(71) Applicant: J.D Components Co., Ltd., Shou Shui Hsiang, Chang Hua Hsien (TW)
(72) Inventor: Lo, Hsin-Hua, CHANG HUA HSIEN (TW); Tsao, Ching-Kuan, CHANG HUA HSIEN (TW); Chuo, Chiang-Che, 406 TAICHUNG CITY (TW)
(74) Representative: Straus, Alexander

(57) **Abstract**

A center-mounted motor (10) includes an enclosure (20) and a crankshaft (31) passing through the enclosure (20). The enclosure (20) contains an assisting-power output unit (40), a speed reduction unit (50), and an output unit (60). A thrust bearing (35) and a resilient member (70) are mounted around the crankshaft (31) and abut against each other. When the motor outputs power, the assisting-power output unit (40) transmits the power to the output unit (60) through the speed reduction unit (50), and the output unit (60) transmits the power to a chainwheel (32) mounted around the crankshaft (31) so as to drive the chainwheel (32) to rotate. During power transmission, the resilient member (70) and the thrust bearing (35) abut against each other and thus provide damping to the crankshaft (31), thereby preventing the crankshaft (31) from rotating with the output unit (60).

## Description

### BACKGROUND OF THE INVENTION

### 1. Technical Field

The present invention relates to power-outputting devices for electric bicycles, and more particularly to a center-mounted motor that has its crankshaft prevented from being driven to rotate.

### 2. Description of Related Art

As known, a power-assisted bicycle typically uses a power-outputting device (such as a center-mounted motor) to provide assisting electric power to complement a cyclist's pedaling force, so as to allow easy and proper riding for both leisure and fitness without overburdening the cyclist.

When outputting assisting electric power, the center-mounted motor has to adopt proper means to prevent the crankshaft from being undesirably driven, and secure reliable measurement that a torque sensor performs against the crankshaft. The inventor of the present invention is thus motivated to invent a center-mounted motor that has its crankshaft prevented from being driven to rotate, which is useful to solve the problems existing in the prior art.

### BRIEF SUMMARY OF THE INVENTION

The primary objective of the present invention is to provide a center-mounted motor that has its crankshaft prevented from being driven to rotate when assisting electric power is active.

For achieving the foregoing objective, the disclosed center-mounted motor comprises an enclosure, a crankset unit, an assisting-power output unit, a speed reduction unit, an output unit, and a resilient member. The crankset unit has a crankshaft, a chainwheel, and a thrust bearing. The crankshaft rotatably passes through the enclosure. The chainwheel is located outside the enclosure and mounted around one end of the crankshaft. The thrust bearing is located inside the enclosure and mounted around an opposite end of the crankshaft. The assisting-power output unit is located inside the enclosure and has a stator, a rotator rotatably provided on the stator, and a driving gear connected to the rotator. The speed reduction unit is located inside the enclosure and has a first speed reduction gear and a second speed reduction gear. The first speed reduction gear engages with the driving gear of the assisting-power output unit, and the second speed reduction gear is connected to the first speed reduction gear. The output unit is provided among the crankshaft, the chainwheel, and the second speed reduction gear of the speed reduction unit. The resilient member is mounted around the crankshaft and abuts against the thrust bearing.

With the configuration described previously, after the rotator of the assisting-power output unit transmits assisting electric power to the first speed reduction gear through the driving gear, the second speed reduction gear in turn transmits the assisting electric power to the output unit, so that the output unit drives the chainwheel rotate. During transmission of the assisting electric power, the resilient member and the thrust bearing abut against each other and thereby provide damping to the crankshaft, so as to prevent the crankshaft from rotating with the output unit.

### BRIEF DESCRIPTION OF THE SEVERAL VIEWS OF THE DRAWINGS

FIG. 1 is a side view of a motor according to a first embodiment of the present invention.
FIG. 2 is a cross-sectional view of the motor taken along Line 2-2 of FIG. 1.
FIG. 3 is a partial, enlarged view of FIG. 2.
FIG.4 is a side view of a motor according to a second embodiment of the present invention.
FIG. 5 is a cross-sectional view of the motor taken along Line 5 - 5 of FIG. 4.
FIG. 6 is a partial, enlarged view of FIG. 5.

### DETAILED DESCRIPTION OF THE INVENTION

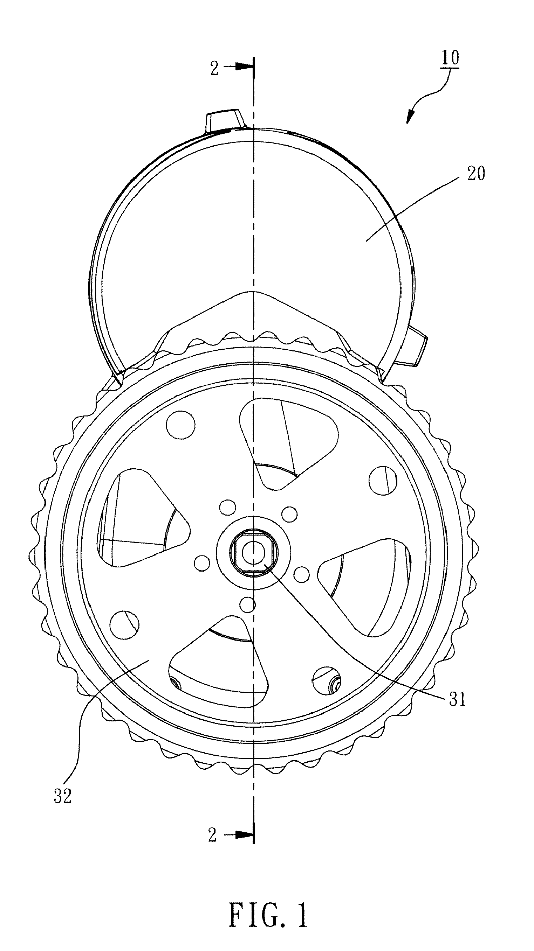

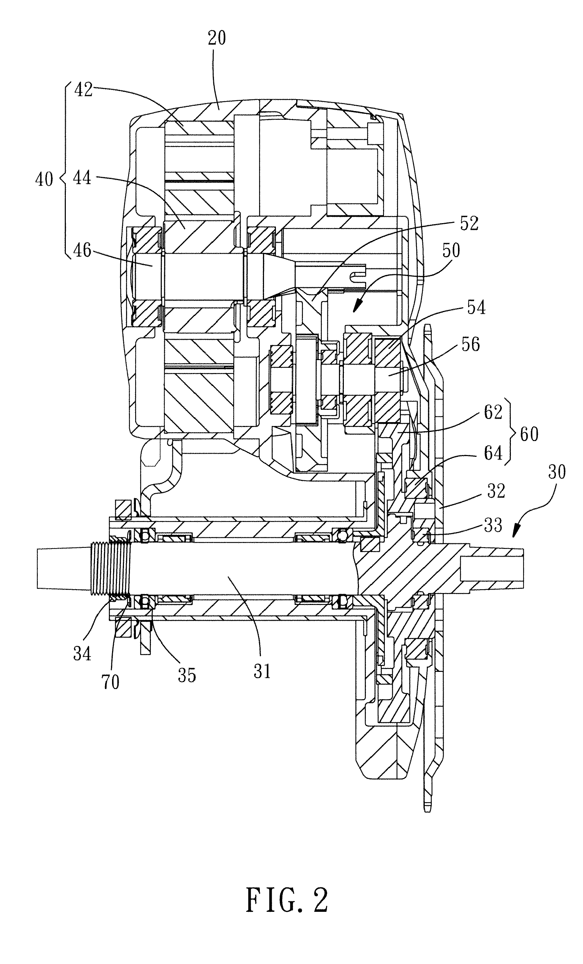

Referring to FIG. 1 and FIG. 2 for the first embodiment of the present invention, the center-mounted motor 10 comprises an enclosure 20, a crankset unit 30, an assisting-power output unit 40, a speed reduction unit 50, an output unit 60, and a resilient member 70.

The crankset unit 30 has a crankshaft 31, a chainwheel 32, a first one-way bearing 33, a fastening nut 34, and a thrust bearing 35. The crankshaft 31 rotatably passes through the enclosure 20. The chainwheel 32 is located outside the enclosure 20 and mounted around one end of the crankshaft 31. The first one-way bearing 33 is fitted between the crankshaft 31 and the chainwheel 32, so that the crankshaft 31 is limited and can only drive the chainwheel 32 to perform one-way rotation. The fastening nut 34 and the thrust bearing 35 are both located inside the enclosure 20 and separately mounted around an opposite end of the crankshaft 31.

The assisting-power output unit 40 is located inside the enclosure 20 and has a stator 42, a rotator 44 provided in the stator 42, and a driving gear 46 connected to the rotator 44. Thereby, with the stator 42 energized, the rotator 44 can drive the driving gear 46 to rotate.

The speed reduction unit 50 is located inside the enclosure 20 and has a plurality of first speed reduction gears 52 and a plurality of second speed reduction gear 54. The first speed reduction gears 52 engage with the driving gear 46 of the assisting-power output unit 40, respectively. Each of the second speed reduction gears 54 is connected to one said first speed reduction gear 52 through a gear shaft 56. Thereby, the first speed reduction gears 52 can be driven by the driving gear 46 to drive the second speed reduction gears 54 to rotate, thereby providing speed reduction.

In the present embodiment, the output unit 60 has an output gear 62 and a second one-way bearing 64. The output gear 62 is mounted around the crankshaft 31 and engages with the second speed reduction gear 54 of the speed reduction unit 50. The second one-way bearing 64 is fitted between the output gear 62 and the chainwheel 32. Thereby, the output gear 62 is driven by the second speed reduction gear 54 to drive the chainwheel 32 through the second one-way bearing 64 to perform one-way rotation.

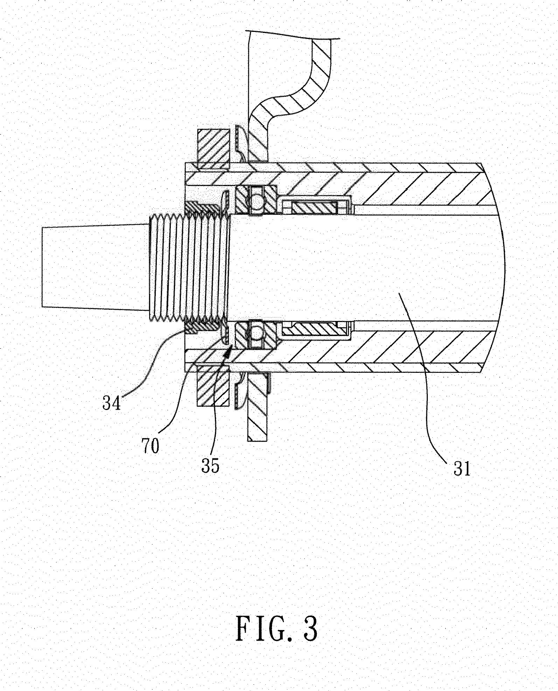

The resilient member 70 is mounted around the crankshaft 31 and resiliently props between the thrust bearing 35 and the fastening nut 34 for providing damping, as shown in FIG. 3. However, it is to be noted that the resilient member 70 is preferably but not limited to an annular one.

When the bicycle having the disclosed device is ridden without outputting assisting electric power, the crankshaft 31 is driven by two crank arms (not shown) to rotate, and during its rotation it drives the chainwheel 32 through the first one-way bearing 33 to rotate unidirectionally, thereby driving the chainwheel 32 to output power.

For outputting assisting electric power, the stator 42 is first energized to make the rotator 44 rotate. The rotation of the rotator 44 drives the first speed reduction gear 52 to synchronously rotate through the driving gear 46. Afterward, the second speed reduction gear 54 drives the output gear 62 to rotate. At last, the output gear 62 drives the chainwheel 32 through the second one-way bearing 64 to perform one-way rotation, thereby driving the chainwheel 32 to output assisting electric power. During output of assisting electric power, the resilient member 70 provides damping to the thrust bearing 35 and the fastening nut 34 simultaneously, so as to prevent the crankshaft 31 from rotating with the output gear 62, thereby ensuring reliable measurement of a connected torque sensor (not shown).

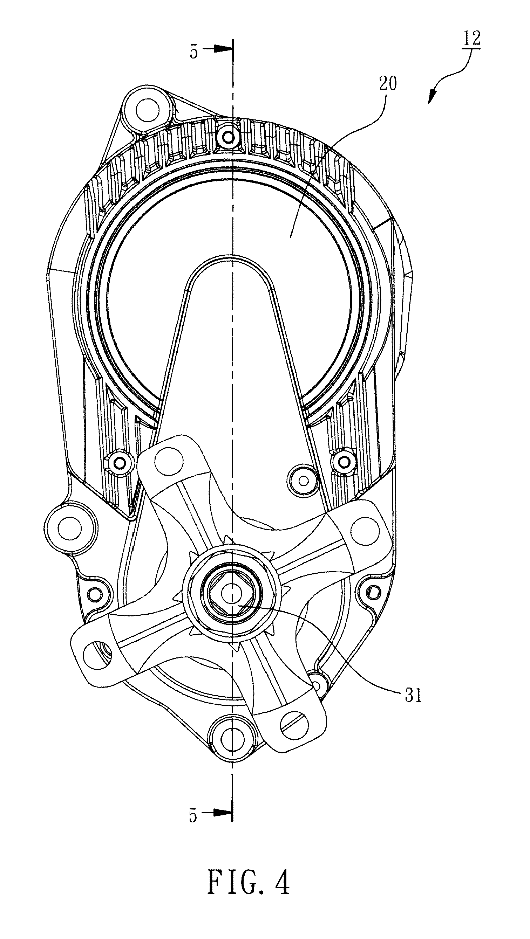

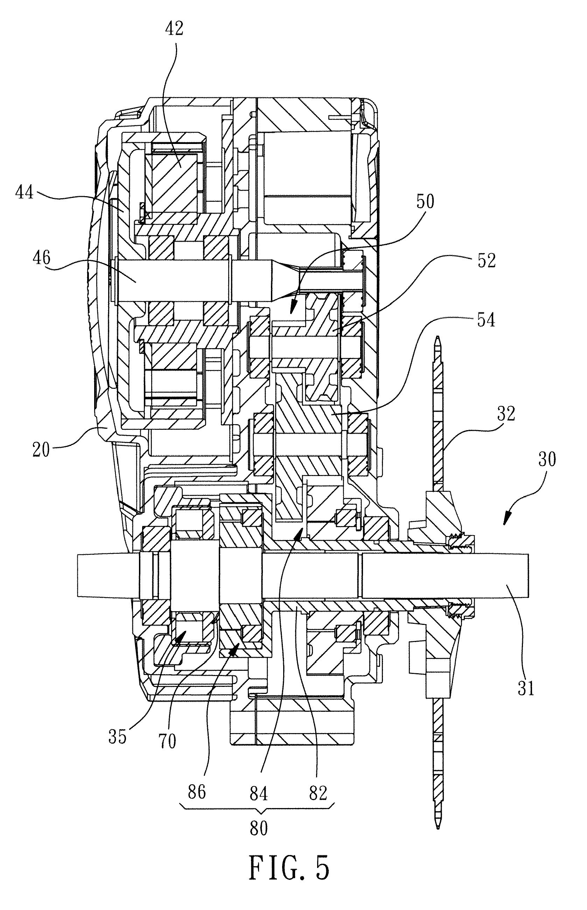

Referring to FIG. 4 and FIG. 5 for the second embodiment of the present invention, the center-mounted motor 12 is roughly similar to its counterpart as described in the first embodiment, except that it has the crankset unit 30, the speed reduction unit 50, the resilient member 70, and the output unit 80 configured differently.

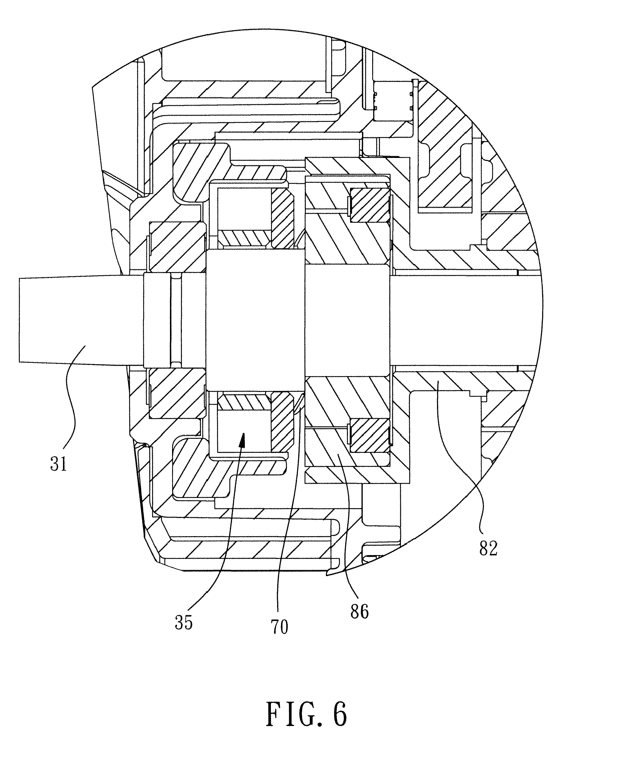

As shown in FIG. 5 and FIG. 6, the crankset unit 30 has a crankshaft 31 that passes through the enclosure 20. The chainwheel 32 and the thrust bearing 35 are mounted around two ends of the crankshaft 31, respectively, and there is not a fastening nut 34 provided.

The speed reduction unit 50 has its first and second speed reduction gears 52, 54 engaging with each other, so that the first and second speed reduction gears 52, 54 rotate synchronously.

The output unit 80 has a transmission kit 82, a first one-way ratchet 84, and a second one-way ratchet 86. The transmission kit 82 is mounted around the crankshaft 31 and engages with the second speed reduction gear 54 of the speed reduction unit 50 through the first one-way ratchet 84. The transmission kit 82 has its one end fixed to the chainwheel 32, and has its an opposite end connected to the crankshaft 31 through the second one-way ratchet 86. Thereby, the second one-way ratchet 86 is driven by the crankshaft 31 to in turn drive the chainwheel 32 through the transmission kit 82 to perform one-way rotation. In addition, the first one-way ratchet 84 is driven by the second speed reduction gear 54 to in turn drive the chainwheel 32 through the transmission kit 82 to perform one-way rotation.

The resilient member 70 is mounted around the crankshaft 31 and resiliently props between the thrust bearing 35 and the second one-way ratchet 86, as shown in FIG. 6, for providing damping.

When the bicycle having the disclosed device is ridden without outputting assisting electric power, the crankshaft 31 is driven by two crank arms (not shown) to rotate, and during its rotation it drives the transmission kit 82 through the second one-way ratchet 86 to make the chainwheel 32 rotate unidirectionally, thereby driving the chainwheel 32 to output power. The first one-way ratchet 84 idles while the transmission kit 82 rotates.

For outputting assisting electric power, the stator 42 is first energized to make the rotator 44 rotate. The rotation of the rotator 44 drives the first speed reduction gear 52 to synchronously rotate through the driving gear 46. Afterward, the first speed reduction gear 52 drives the second speed reduction gear 54 engaging with it to rotate, so that the second speed reduction gear 54 drives the first one-way ratchet 84 to rotate. At last, the first one-way ratchet 84 drives the chainwheel 32 through the transmission kit 82 to perform one-way rotation, thereby driving the chainwheel 32 to output assisting electric power. During output of assisting electric power, the resilient member 70 provides damping to the thrust bearing 35 and the second one-way ratchet 86 simultaneously, so as to prevent the crankshaft 31 from rotating with the transmission kit 82 , thereby ensuring reliable measurement of a connected torque sensor.

To sum up, with the resilient member 70, the disclosed center-mounted motor 10 or 12 can effectively prevent the crankshaft 31 from being unexpectedly driven by the related components when the assisting electric power is output, thereby ensuring accurate measurement of the torque applied to the crankshaft 31 performed by the torque sensor, and maintaining proper output of the assisting electric power.

## Claims

1. A center-mounted motor (10, 12), comprising:
an enclosure (20);
a crankset unit (30), having a crankshaft (31), a chainwheel (32), and a thrust bearing (35), wherein the crankshaft (31) rotatably passes through the enclosure (20) so that the chainwheel (32) is located outside the enclosure (20) and at one end of the crankshaft (31), and the thrust bearing (35) is located inside the enclosure (20) and at an opposite end of the crankshaft (31) ;
an assisting-power output unit (40), being located inside the enclosure (20) and having a stator (42), a rotator (44) rotatably provided on to the stator (42), and a driving gear (46) connected to the rotator (44);
a speed reduction unit (50), being located inside the enclosure (20) and having a first speed reduction gear (52) and a second speed reduction gear (54), wherein the first speed reduction gear (52) engages with the driving gear (46) of the assisting-power output unit (40), and the second speed reduction gear (54) is connected to the first speed reduction gear (52);
an output unit (60), being located among the crankshaft (31), the chainwheel (32), and the second speed reduction gear (54) of the speed reduction unit (50); and
a resilient member (70), being mounted around the crankshaft (31) and abutting against the thrust bearing (35).

2. The center-mounted motor of claim 1, wherein the crankset unit (30) further comprises a fastening nut (34) that is fixed to the crankshaft (31) and abuts against the resilient member (70).

3. The center-mounted motor of claim 2, wherein the crankset unit (30) has a first one-way bearing (33) that is fitted between the crankshaft (31) and the chainwheel (32), and the output unit (60) has an output gear (62) and a second one-way bearing (64), in which the output gear (62) is mounted around the crankshaft (31) and engages with the second speed reduction gear (54) of the speed reduction unit (50), and the second one-way bearing (64) is fitted between the output gear (62) and the chainwheel (32).

4. The center-mounted motor of claim 3, wherein the first and second speed reduction gears (52), (54) are connected by a gear shaft (56).

5. The center-mounted motor of claim 1, wherein the output unit (80) has a transmission kit (82), a first one-way ratchet (84), and a second one-way ratchet (86), in which the transmission kit (82) is mounted around the crankshaft (31) so as to engage with the second speed reduction gear (54) of the speed reduction unit (50) through the first one-way ratchet (84) and has one end fixed to the chainwheel (32) and an opposite end connected to the crankshaft (31) through the second one-way ratchet (86), and the second one-way ratchet (86) abuts against the resilient member (70).

6. The center-mounted motor of claim 5, wherein the first and second speed reduction gears (52), (54) engage with each other.
